# EUROPEAN PATENT SPECIFICATION

(11) **EP 4 691 979 B1**
(45) Date of publication and mention of the grant of the patent: **12.08.2026**
(21) Application number: 24211891.7
(22) Date of filing: 08.11.2024
(51) Int. Cl.: C01B 32/33, C01B 32/342, H01G 11/34, H01G 11/44

(54) **METHOD FOR MAKING ACTIVATED CARBON MATERIAL FOR SUPERCAPACITOR**
VERFAHREN ZUR HERSTELLUNG VON AKTIVKOHLEMATERIAL FÜR SUPERKONDENSATOR
PROCÉDÉ DE FABRICATION DE MATÉRIAU DE CHARBON ACTIF POUR SUPERCONDENSATEUR

(30) Priority: 06.08.2024 TW 113129442
(43) Date of publication of application: 11.02.2026
(73) Proprietor: CPC Corporation, Taiwan, Kaohsiung City 811251 (TW)
(72) Inventor: CHEN, Yan-Shi, 60051 Chiayi City (TW)
(74) Representative: Regimbeau

(56) References cited:
- CN-A- 103 204 501
- CN-B- 114 835 115
- US-B2- 10 008 337
- WANG M X ET AL: "Preparation of high-performance activated carbons for electric double layer capacitors by KOH activation of mesophase pitches", NEW CARBON MATERIALS, ELSEVIER, AMSTERDAM, NL, vol. 25, no. 4, 1 June 2010 (2010-06-01), pages 285 - 290, XP027254855, ISSN: 1872-5805, [retrieved on 20100601]

## Description

The present disclosure relates to a method for making a carbon material, and more particularly to a method for making an activated carbon material for a supercapacitor.

Supercapacitors are also known as ultracapacitors, and include electrostatic double-layer capacitors, among others. In the industry, supercapacitors are known as electrochemical capacitors having a high energy density, and capacity and performance of supercapacitors are between those of electrolytic capacitors and rechargeable batteries. Supercapacitors have become the main tool in power supply system due to fast charging/discharging and long cycle life thereof. At present, carbon materials are the most common electrode material used in supercapacitors. It should be noted that, since carbon materials can be produced by subjecting heavy hydrocarbon oil sold at low price to multiple processes in oil refineries, the economic benefits of such heavy hydrocarbon oil can be further improved.

CN 117342554 A discloses a method for preparing a coal pitch-based activated carbon, which includes steps (a) to (e) conducted in sequence.

In step (a), a coal-based pitch is placed in a high-temperature oxidation furnace, and air is introduced from the bottom portion of the high-temperature oxidation furnace to allow oxidation process to proceed for 2 hours to 5 hours so as to obtain an oxidized material.

In step (b), the oxidized material is subjected to crushing process, and the thus obtained crushed material is subjected to sieving using a mesh screen having 4-mesh to 30-mesh so as to obtain oxidized particles.

In step (c), the oxidized particles are added into a rotary carbonization furnace and then water vapor is introduced into the rotary carbonization furnace to allow a charring reaction to proceed at 100°C to 450°C so as to obtain carbonized material having a certain strength.

In step (d), the carbonized material is activated by physical activation. To be specific, the carbonized material is added into a rotary activation furnace having a temperature of 650°C to 800°C and then an activator gas is introduced therein to allow an activation reaction to proceed for 1 hour to 5 hours under the condition that oxygen concentration in the rotary activation furnace being controlled to not exceed 5 vol%, so as to obtain an activated material having a porous structure.

In step (e), the activated material is subjected to, crushing and sieving so as to obtain granular activated charcoal, or grinding and sieving so as to obtain powdered activated charcoal.

Although the method of CN 117342554 A is capable of producing activated carbon suitable for making electrode materials of supercapacitors, because CN 117342554 A utilizes physical activation to active the carbonized material, specific surface area (also known as BET) and total pore volume of the granular activated charcoal are merely 971 m²/g and 0.65 cm³/g, respectively, or in the case of the powdered activated charcoal, the BET and the total pore volume thereof are merely 958 m²/g and 0.66 cm³/g, respectively, and thus, contribution of the activated carbon to the specific capacitance of supercapacitors is not significant.

US 10008337 discloses a method for manufacturing an activated carbon for use in an electric double-layer capacitor electrode using a carbon raw material as a precursor, which is mixed with an alkali activator before applying an activation treatment, using petroleum raw coke as starting material.

In view of the above, improvement in the method for making the activated carbon material to increase the **BET** and the total pore volume thereof so as to increase the specific capacitance of supercapacitors made from such activated carbon material is an aim to be achieved by those skilled in the art.

Therefore, an object of the present disclosure is to provide a method for making an activated carbon material for a supercapacitor that can alleviate at least one of the drawbacks of the prior art.

According to the present disclosure, the method includes the steps of:
A) heating a heavy hydrocarbon oil at a pressure ranging from 2 atm to 3 atm and a temperature ranging from 480°C to 580°C for at least 4 hours such that the heavy hydrocarbon oil undergoes a coking reaction to form a soft carbon precursor, the soft carbon precursor containing a mesophase structure of greater than 50 vol% based on 100 vol% of the soft carbon precursor as determined according to ASTM D4616-95 (2013), and having a quinoline-insoluble content ranging from 78 wt% to 98 wt% as determined according to ASTM D7280-06 (2011) and a toluene-insoluble content ranging from 88 wt% to 100 wt% as determined according to ASTM D4312-95a (2010);
B) mixing the soft carbon precursor and an activator so as to obtain a mixture;
C) heating the mixture such that the mixture undergoes an activation reaction and a carbonization reaction to obtain a first carbonaceous component containing an activated carbon and a residual of the activator;
D) removing the residual of the activator from the first carbonaceous component so as to obtain a second carbonaceous component;
E) grinding and sizing the second carbonaceous component so as to obtain a third carbonaceous component; and
F) heating the third carbonaceous component so as to obtain the activated carbon material for the supercapacitor.

Other features and advantages of the present disclosure will become apparent in the following detailed description of the embodiment(s) with reference to the accompanying drawings. It is noted that various features may not be drawn to scale.

FIGS. 1A to 1E are polarizing microscope images respectively showing soft carbon precursors obtained in step (A) of methods for making activated carbon materials of Comparative Example 1 (CE1), Comparative Example 2 (CE2), Example 1 (E1), Example 2 (E2) and Example 3 (E3).

FIG. 2 is a graph illustrating relationship between capacitance and number of cycles of pouch cells that are respectively assembled using activated carbon materials obtained by methods for making activated carbon material of Example 1a (E1a), Example 1g (E1g), Example 1i (E1i) and Example 3 (E3).

FIG. 3 is a graph illustrating relationship between energy density and power density for pouch cells of E1a, E1g, E1i and E3 which was derived based on the data shown in FIG. 2.

FIG. 4 is a graph illustrating relationship between capacitance and discharge current for pouch cells of E1a, E1g, E1i and E3 at a current density ranging from 0.50 A/g to 25.0 A/g.

FIG. 5A is a graph illustrating relationship between capacity retention rate and number of cycles for supercapacitors of Example 1f (E1f) (assembled using an activated carbon material obtained by a method for making activated carbon material of E1f) and Comparative Example 3 (CE3) (assembled using a commercial activated carbon material) under a test condition in which a charge C-rate is 100 C and a charge/discharge current is 26 A.

FIG. 5B is a graph illustrating relationship between capacity retention rate and number of cycles for supercapacitors of E1f and CE3 under a test condition in which a charge C-rate is 200 C and a charge/discharge current is 52 A.

Before the present disclosure is described in greater detail, it should be noted that where considered appropriate, reference numerals or terminal portions of reference numerals have been repeated among the figures to indicate corresponding or analogous elements, which may optionally have similar characteristics.

It should be noted herein that for clarity of description, spatially relative terms such as "top," "bottom," "upper," "lower," "on," "above," "over," "downwardly," "upwardly" and the like may be used throughout the disclosure while making reference to the features as illustrated in the drawings. The features may be oriented differently (e.g., rotated 90 degrees or at other orientations) and the spatially relative terms used herein may be interpreted accordingly.

An embodiment of a method for making an activated carbon material for a supercapacitor according to the present disclosure includes the following steps A) to F).

In step A), a heavy hydrocarbon oil is heated at a pressure ranging from 2 atm to 3 atm and a working temperature ranging from 480°C to 580°C for a working time period of at least 4 hours such that the heavy hydrocarbon oil undergoes a coking reaction to form a soft carbon precursor that has a quinoline-insoluble content ranging from 78 wt% to 98 wt% as determined according to ASTM D7280-06 (2011) and a toluene-insoluble content ranging from 88 wt% to 100 wt% as determined according to ASTM D4312-95a (2010). In this step, the soft carbon precursor contains a mesophase structure in an amount of greater than 50 vol% based on 100 vol% of the soft carbon precursor as determined according to ASTM D4616-95 (2013). To be specific, the heavy hydrocarbon oil is transported to a reaction tank (not shown) and then heated under the aforesaid working temperature and pressure for a time period of at least 4 hours, so as to allow the heavy hydrocarbon oil to be subjected to a pyrolysis reaction and a condensation polymerization reaction, thereby forming the soft carbon precursor.

In step B), the soft carbon precursor and an activator are mixed so as to obtain a mixture. In certain embodiments, a weight ratio of the soft carbon precursor to the activator ranges from 0.125 to 0.25, that is, the weight ratio of the soft carbon precursor to the activator ranges from 1:4 to 1:8. In step B) of this embodiment, an impregnation process is utilized, and the activator is exemplified by potassium hydroxide (KOH), but is not limited thereto. To be specific, in step B), a mixed solution containing the soft carbon precursor, the activator and water is placed into a constant temperature bath of an ultrasonic oscillator (not shown in the figures) and then subjected to ultrasonic oscillation for 3 hours, followed by placement into a vacuum oven (not shown in the figures) to be dried at 110°C for 6 hours, so as to obtain the mixture.

In step C), the mixture is heated such that the mixture undergoes an activation reaction and a carbonization reaction to obtain a first carbonaceous component containing an activated carbon and a residual of the activator. In step C) of certain embodiments, the mixture is heated to a temperature ranging from 700°C to 900°C at a heating rate ranging from 1°C/min to 10°C/min under nitrogen atmosphere.

In step D), the residual of the activator is removed from the first carbonaceous component so as to obtain a second carbonaceous component. In step D) of this embodiment, the first carbonaceous component is subjected to an acid washing treatment, a water washing treatment and a drying treatment conducted in sequence. In step D) of this embodiment, the acid washing treatment is conducted using an aqueous solution containing hydrochloric acid (HCl), but is not limited thereto. To be specific, in the acid washing treatment, the aqueous solution containing HCl is introduced into the first carbonaceous component to allow acid-base neutralization between the HCl and the residual of the activator (i.e., residual KOH) so as to form potassium chloride (KCI); in the water washing treatment, deionized water is introduced into the aqueous solution to remove the KCl and HCl so that the pH value of the aqueous solution is controlled to be approximately 7.0; and in the drying treatment, the aqueous solution containing the activated carbon is heated at a temperature ranging from 100°C to 150°C for at least 4 hours so as to remove the deionized water, thereby obtaining the second carbonaceous component.

In step E), the second carbonaceous component is grinded and sized so as to obtain a third carbonaceous component. To be specific, the second carbonaceous component is grinded and then sized so that a portion of the thus obtained third carbonaceous component has a D50 particle size ranging from 8 µm to 12 µm, a D10 particle size ranging from 2 µm to 6 µm, and a D90 particle size ranging from 14 µm to 20 µm. In step E) of this embodiment, a classifying cyclone is used for sieving (i.e., sizing) after grinding of the second carbonaceous component, such that the thus obtained third carbonaceous component has a D50 particle size ranging from 8 µm to 10 µm, a D10 particle size ranging from 2 µm to 4 µm, and a D90 particle size ranging from 14 µm to 16 µm.

In step F), the third carbonaceous component is heated so as to obtain the activated carbon material for the supercapacitor. In certain embodiments, step F) is conducted by heating the third carbonaceous component to a temperature of less than 1000°C at a heating rate ranging from 1°C/min to 10°C/min under nitrogen atmosphere. In step F), the activated carbon material for supercapacitor has a plurality of micropores and a plurality of mesopores each having a diameter that is greater than a diameter of each of the micropores, and a ratio of a total volume of the micropores to a total volume of the mesopores ranges from 0.45 to 7.5, which is determined according to the procedures described in paragraphs [0041]-[0047].

The present disclosure will be described by way of the following examples. However, it should be understood that the following examples are intended solely for the purpose of illustration and should not be construed as limiting the present disclosure in practice.

The present disclosure provides the following examples and specific examples based on the embodiment of the method for making the activated carbon material so as to describe in detail the specific procedures of the method, the activated carbon material obtained by the method, the carbon electrode prepared from the activated carbon material, the supercapacitor assembled from the carbon electrode, and the electrical properties of the supercapacitor.

### Method for making activated carbon material for supercapacitor

### Comparative Example 1 (CE1)

The procedures in a method for making an activated carbon material of CE1 were based on those disclosed in Example 5 of the applicants' Taiwanese Invention Patent Certificate No. TW I656094 B.

First, an isotropic pitch was subjected to a first thermal treatment conducted in three stages so as to obtain a soft carbon precursor. To be specific, in a first stage, heating was conducted from 30°C to 100°C at a heating rate of 2°C/min and keeping at 100°C for 0.5 hours; in a second stage, heating was conducted from 100°C to 200°C at a heating rate of 2°C/min and keeping at 200°C for 0.5 hours; and in a third stage, heating was conducted from 200°C to 430°C at a heating rate of 2°C/min and keeping at 430°C for 1 hour. Next, the soft carbon precursor and potassium hydroxide (KOH), in a weight ratio of 1:4, were mixed by an impregnation process so as to obtain a mixture. Then, the mixture was subjected to a second thermal treatment, in which the mixture was heated from 30°C to 800°C at a heating rate of 5°C/min and kept at 800°C for 1 hour, so as to obtain a first carbonaceous component containing an activated carbon and a residual of KOH. Afterwards, an aqueous solution containing HCl (concentration: 1 M) was introduced into the first carbonaceous component to allow acid-base neutralization between the HCl and the residual of KOH so as to form potassium chloride (KCI). Subsequently, deionized water was introduced into the aqueous solution to remove the KCI and HCl so that pH value of the aqueous solution was approximately 7.0, followed by drying the aqueous solution containing the activated carbon at a temperature ranging from 100°C to 150°C so as to remove the deionized water, thereby obtaining a second carbonaceous component. Thereafter, the second carbonaceous component was subjected to a third thermal treatment, in which the second carbonaceous component was heated under argon atmosphere from 30°C to 700°C at a heating rate of 10°C/min and kept at 700°C for 1 hour, so as to obtain an activated carbon material for a supercapacitor.

### Comparative Example 2 (CE2)

The procedures in the method for making the activated carbon material of CE2 were substantially similar to those of CE1, except for the following differences in: (i) the first thermal treatment; (ii) amount of KOH used; (iii) the third thermal treatment; and (iv) the second carbonaceous component being subjected to grinding and sizing processes to obtain a third carbonaceous component before conducting the third thermal treatment. To be specific, a heavy hydrocarbon oil was subjected to the first thermal treatment at a pressure ranging from 2 atm to 3 atm and a working temperature of 450°C for at least 4 hours to allow the heavy hydrocarbon oil to undergo a coking reaction so as to obtain a soft carbon precursor containing mesophase structure. Next, the soft carbon precursor and KOH, in a weight ratio of 1:6, were mixed by an impregnation process so as to obtain a mixture. In addition, the second carbonaceous component was subjected to grinding and sizing processes so as to obtain the third carbonaceous component, followed by conducting a third thermal treatment, in which the third carbonaceous component was heated under nitrogen atmosphere to 700°C at a heating rate of 10°C/min and keeping at 700°C for 0.5 hours.

### Examples 1a to 1i, 2 and 3 (E1a to E1i, E2 and E3)

The procedures in the methods for making the activated carbon materials of E1a, E1b, E1c, E1d, E1e, E1f, E1g, E1h, E1i, E2 and E3 were substantially similar to those of CE2, and differences in process parameters of these examples were summarized in Table 1 below. It should be noted that, for a respective one of the activated carbon materials of E1a, E1b, E1c, E1d, E1e, E1f, E1g, E1h and E1i, since the working temperature in the first thermal treatment conducted to obtain the soft carbon precursors thereof was similar, E1a, E1b, E1c, E1d, E1e, E1f, E1g, E1h and E1i were collectively referred to as E1 in the evaluations for the soft carbon precursor described hereinafter.

**Table 1**

| | First thermal treatment^{a} | Impregnation process | | Second thermal treatment^{b} | | Third thermal treatment^{c} | |
|---|---|---|---|---|---|---|---|
| | Working temperature | Soft carbon precursor (parts by weight) | KOH (parts by weight) | Temperature (°C) | Time period (hour) | Temperature (°C) | Time period (hour) |
| CE2 | 450 | 1 | 6 | 800 | 1.0 | 700 | 0.5 |
| E1a | 480 | 1 | 4 | 800 | 1.0 | 700 | 0.5 |
| E1b | 480 | 1 | 5 | 800 | 1.0 | 700 | 0.5 |
| E1c | 480 | 1 | 6 | 800 | 1.0 | 700 | 0.5 |
| E1d | 480 | 1 | 7 | 800 | 1.0 | 700 | 0.5 |
| E1e | 480 | 1 | 8 | 800 | 1.0 | 700 | 0.5 |
| E1f | 480 | 1 | 5 | 800 | 1.0 | 800 | 2.0 |
| E1g | 480 | 1 | 6 | 800 | 1.0 | 850 | 2.0 |
| E1h | 480 | 1 | 7 | 800 | 1.0 | 700 | 1.0 |
| E1i | 480 | 1 | 5 | 800 | 1.0 | 700 | 0.5 |
| E2 | 550 | 1 | 6 | 800 | 1.0 | 700 | 0.5 |
| E3 | 580 | 1 | 5 | 800 | 1.0 | 700 | 0.5 |
| "^{a}": Working temperature was kept for greater than 4 hours | | | | | | | |
| "^{b}": Heating rate was 5°C/min | | | | | | | |
| "^{c}": Heating rate was 10°C/min | | | | | | | |

### Property evaluation of soft carbon precursor and activated carbon material

### 1. Measurement of quinoline-insoluble (QI) content

A respective one of the soft carbon precursors obtained by the methods of CE1, CE2, E1, E2 and E3 was subjected to measurement of QI content in accordance to the procedures set forth in ASTM D7280-06 (2011).

### 2. Measurement of toluene-insoluble (TI) content

A respective one of the soft carbon precursors obtained by the methods of CE1, CE2, E1, E2 and E3 was subjected to measurement of TI content in accordance to the procedures set forth in ASTM D4312-95a (2010).

### 3. Determination of amount (vol%) of mesophase structure

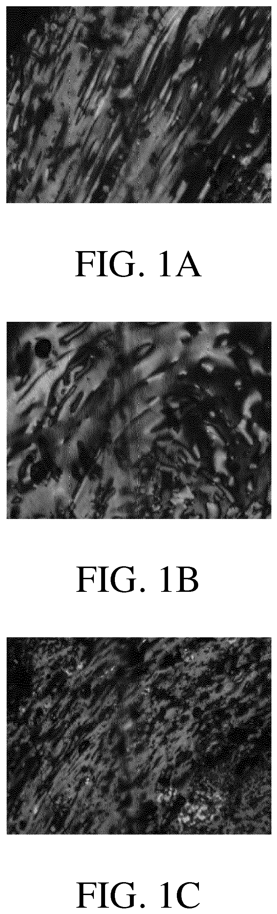

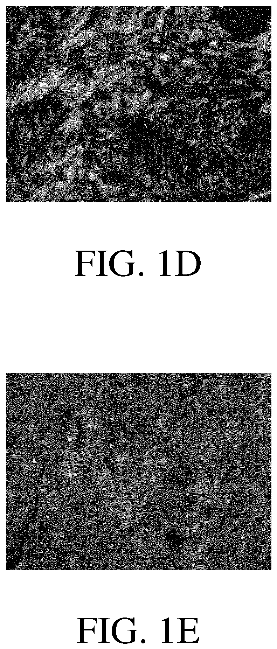

A respective one of the soft carbon precursors obtained by the methods of CE1, CE2, E1, E2 and E3 was subjected to microscopical analysis using a polarizing microscope (Manufacturer: Nikon; Model no.: Eclipse LV100POL) so as to obtain polarizing microscope images (as shown in FIGS. 1A to 1E), and then each of the polarizing microscope images were analyzed to determine the amount of mesophase structure in each of the soft carbon precursors in accordance to the procedures set forth in ASTM D4616-95 (2013).

### 4. Determination of yield of activated carbon material

A respective one of the activated carbon material obtained by the methods of CE1, CE2, E1a to E1i, E2 and E3 was subjected to determination of yield thereof using the following Equation (I): $Yield of activated carbon material = \left({W}_{a}\div {W}_{0}\right) \times 100 %$ in which
Wₐ = weight of activated carbon material
W₀ = weight of isotropic pitch or soft carbon precursor

### 5. Measurement of specific surface area (BET)

A respective one of the activated carbon materials obtained by the methods of E1a to E1i, E2, E3, CE1 and CE2 were subjected to measurement of BET using a high-performance adsorption analyzer (Manufacturer: Micromeritics Instrument Corp., USA; Model no.: ASAP^{™} 2020M) in which adsorption and desorption analyses was conducted using nitrogen gas, so as to determine the relationship between adsorption capacity (V, unit: cm³/g) and relative pressure (P/P₀) of nitrogen at equilibrium pressure. During the measurement, BET adsorption isotherm relationship having the following Equation (II) was utilized: $\frac{P}{{P}_{o} - P} \frac{1}{V} = \frac{1}{{CV}_{m}} + \frac{C - 1}{{CV}_{m}} \frac{P}{{P}_{o}}$ in which
*P* = equilibrium pressure
P₀ = saturated vapor pressure
*C* = BET constant
*V* = adsorption capacity of the gas at equilibrium pressure
*Vₘ* = saturated adsorption capacity of the gas to produce a monolayer

Then, a plot illustrating relationship between each of the adsorption capacity and the relative pressure thereof was created by plotting *P*/*V*(*P₀-P*) against *P*/*P₀* that ranged from 0 to 1 so as to obtain the slope (*C*-1/*CVₘ*) and the intercept *(1*/*CVₘ)* of the plot. Thereafter, BET was calculated using the following Equation (III): ${S}_{BET} = {N}_{m} σ = \frac{{V}_{m} Nσ}{v}$ in which
*Nₘ* = number of gas molecules adsorbed
*N* = Avogrado constant
σ = adsorption cross-sectional area of adsorbed gas molecules
*v =* adsorption capacity of the gas at equilibrium pressure

### 6. Determination of mesoporous BET and microporous BET

The plot illustrating relationship between each of the adsorption capacity and the relative pressure thereof as described in Item 5 above was applied to the heterogeneous surface-2-dimension non-localized density functional theory (abbreviated as HS-2D-NLDFT hereinafter) analytical model so as to determine mesoporous BET and microporous BET.

### 7. Measurement of total pore volume (unit: cm³/g)

A respective one of the activated carbon materials obtained by the methods of E1a to E1i, E2, E3, CE1 and CE2 were subjected to measurement of BET using the aforesaid high-performance adsorption analyzer, in which adsorption and desorption analyses with nitrogen as the adsorbate was conducted, so as to obtain a plot illustrating the relationship between adsorption capacity (V) and relative pressure (P/P₀) of nitrogen at equilibrium pressure, followed by applying the curves in the plot to the HS-2D-NLDFT analytical model so as to calculate total pore volume of each of the activated carbon materials.

### 8. Determination of distribution of micropores

A respective one of the activated carbon materials obtained by the methods of E1a to E1i, E2, E3, CE1 and CE2 were subjected to determination of distribution of micropores using the curves in the plot illustrating the relationship between adsorption and desorption of nitrogen in combination with the HS-2D-NLDFT analytical model.

### 9. Determination of distribution of mesopores

A respective one of the activated carbon materials obtained by the methods of E1a to E1i, E2, E3, CE1 and CE2 were subjected to determination of distribution of mesopores using the curves in the plot illustrating the relationship between adsorption and desorption of nitrogen in combination with the HS-2D-NLDFT analytical model.

### 10. Determination of ratio of total volume of micropores to total volume of mesopores

A respective one of the activated carbon materials obtained by the methods of E1a to E1i, E2, E3, CE1 and CE2 were subjected to determination of a ratio of total volume of micropores to total volume of mesopores based on the total pore volume of the activated carbon material determined in Item 7 above, and the percentage of micropores was calculated following Equation (IV): $Percentage of micropores = \left({V}_{μ}\div {V}_{total}\right) \times 100 %$ in which
V_{µ} = total volume of micropores with pore width of not greater than 2 nm
Vₜₒₜₐₗ = total pore volume of activated carbon material

Referring to FIGS. 1A to 1E, which respectively show polarizing microscope images of soft carbon precursors of CE1, CE2, E1, E2 and E3, the black-colored regions are crystals in a same phase (i.e., an isotropic phase) and the greyish regions are crystals having mesophase structure. The amount of mesophase structure in the polarizing microscope images of the soft carbon precursors of CE1, CE2, E1, E2 and E3, as determined in accordance to the procedures set forth in ASTM D4616-95 (2013), are 78 vol%, 65 vol%, 52 vol%, 60 vol% and 85 vol%, respectively (see Table 2 below).

**Table 2**

| | CE1 | CE2 | E1 | E2 | E3 |
|---|---|---|---|---|---|
| Softening point (°C) | 185 | - | - | - | - |
| Temperature of first thermal treatment (°C) | 430 | 450 | 480 | 550 | 580 |
| Pressure of first thermal treatment (atm) | 1 | 2-3 | 2-3 | 2-3 | 2-3 |
| Amount of mesophase structure (vol%) | 78 | 65 | 52 | 60 | 85 |
| Toluene-insoluble content (wt%) | 45.0 | 95.0 | 89.9 | 99.6 | 96.4 |
| Quinoline-insoluble content (wt%) | 16.0 | 78.1 | 96.4 | 97.4 | 88.8 |

As shown in Table 2, the toluene-insoluble content of the soft carbon precursors of CE1, CE2, E1, E2 and E3, as determined in accordance to the procedures set forth in ASTM D4312-95a (2010), were 45.0 wt%, 95.0 wt%, 89.9 wt%, 99.6 wt% and 96.4 wt%, respectively, while the quinoline-insoluble content of the soft carbon precursors of CE1, CE2, E1, E2 and E3, as determined in accordance to the procedures set forth in ASTM D7280-06 (2011), were 16.0 wt%, 78.1 wt%, 96.4 wt%, 97.4 wt% and 88.8 wt%, respectively. Although the soft carbon precursor of CE1 contained mesophase structures in an amount up to 78 vol% (based on 100 vol% of the soft carbon precursor), the toluene-insoluble content and the quinoline-insoluble content of CE1 were very low, and thus such components were easily removed by KOH, resulting in decrease in the yield of activated carbon material.

Referring to Table 3 below, gradual increase in the amount of activator would result in gradual increase in the total pore volume of activated carbon material for supercapacitor, as exhibited by the results of E1a, E1b, E1c, E1d and E1e, indicating that a respective one of the activated carbon materials for supercapacitor of E1a, E1b, E1c, E1d and E1e, after being made into an electrode which is then assembled into a supercapacitor, is beneficial to increase the power density of the supercapacitor.

**Table 3**

| | P¹:A² | BET (m²/g) | Microporous BET (m²/g) | Total pore volume of activated carbon material (m³/g) | Total volume of micropores (%) | Total volume of mesopores (%) |
|---|---|---|---|---|---|---|
| CE1 | 1:4 | 2802 | 2028 | 1.24 | 72 | 28 |
| CE2 | 1:6 | 2269 | 2001 | 1.09 | 88 | 12 |
| E1a | 1:4 | 2616 | 1727 | 1.13 | 81 | 19 |
| E1b | 1:5 | 2895 | 2487 | 1.21 | 85 | 15 |
| E1c | 1:6 | 2696 | 2243 | 1.30 | 83 | 17 |
| E1d | 1:7 | 2900 | 1302 | 1.68 | 45 | 55 |
| E1e | 1:8 | 2820 | 944 | 1.73 | 33 | 67 |
| E1f | 1:5 | 2409 | 1856 | 0.86 | 81 | 19 |
| E1g | 1:6 | 2847 | 2034 | 1.33 | 66 | 34 |
| E1h | 1:7 | 2824 | 1938 | 1.36 | 59 | 41 |
| E1i | 1:5 | 2555 | 1889 | 1.16 | 71 | 29 |
| E2 | 1:6 | 2301 | 1977 | 1.11 | 86 | 14 |
| E3 | 1:5 | 2116 | 1640 | 0.95 | 74 | 26 |
| "¹": Parts by weight of soft carbon precursor | | | | | | |
| "²": Parts by weight of activator | | | | | | |

It should be noted that, when an activated carbon material is applied to a supercapacitor, micropores in the activated carbon material can facilitate formation of electrostatic double layer structure during operation of the supercapacitor by providing a large adsorption area for electrolyte ions, and thus helps in increasing the specific capacitance of the supercapacitor so as to increase energy density thereof. In addition, in the activated carbon material, each of the mesopores has a diameter relatively greater than a diameter of each of the micropores, resulting in low resistance to electrolyte, and thus reduces resistance to movement of electrolyte ions and electric charges, thereby providing rapid transfer of electrolyte ions and electric charges in the supercapacitor. In particular, when the supercapacitor is applied in an environment where the current density is not less than 100 A/g, such supercapacitor can still maintain a high specific capacitance so as to increase power density thereof. Based on the data shown in Table 3, a ratio of a total volume of the micropores to a total volume of the mesopores in the activated carbon materials of E1a, E1b, E1c, E1d, E1e, E1f, E1g, E1h, E1i, E2 and E3 was calculated to range from 0.49 to 6.14. These results indicate that when the activated carbon materials of the examples of the present disclosure are respectively applied to supercapacitors, such activated carbon materials can provide rapid transfer of electrolyte ions and electric charges in the supercapacitors, and also allow each of the supercapacitors to maintain high specific capacitance in an environment with high current density.

Based on the results shown in Table 3, the applicants selected a respective one of the activated carbon materials of CE1, E1a, E1b, E1f, E1g, E1h, E1i and E3 to prepare an electrode slurry and a group of carbon electrode sheets in sequence, followed by assembling the group of carbon electrode sheets into a supercapacitor. The electrode slurry was divided into a first electrode slurry and a second electrode slurry, and the group of carbon electrode sheets are divided into a first group of carbon electrode sheets and a second group of carbon electrode sheets. To be specific, the first electrode slurry is used to prepare the first group of carbon electrode sheets, which were then assembled into a test supercapacitor, whereas the second electrode slurry is used to prepare the second group of carbon electrode sheets, which were then assembled into a pouch cell. It should be noted that, a respective one of the pouch cells of CE1, E1a, E1b, E1f, E1g, E1h, E1i and E3 had a capacitance that is greater than a capacitance of a respective one of the test supercapacitors of CE1, E1a, E1b, E1f, E1g, E1h, E1i and E3, and the capacitance of each of the pouch cells was approximately 1 F.

### Starting materials for electrode slurry

Carboxymethyl cellulose powder (abbreviated as CMC powder hereinafter) was purchased from JSR Co., Ltd., and product number thereof was JSR-104A.

Conductive carbon black was purchased from Timcal, and trade name thereof was Super P.

Styrene-butadiene rubber (abbreviated as SBR hereinafter) was purchased from Nippon Paper Industries Co., Ltd., and product number thereof was MAC350HC.

Activated carbon materials (abbreviated as AC hereinafter) were the aforesaid activated carbon materials of CE1, E1a, E1b, E1f, E1g, E1h, E1i and E3.

### Preparation for electrode slurry

First, CMC powder was added to a first deionized water (volume: 12 mL), and then homogenization was conducted using a homogenizer at room temperature for 30 minutes to completely dissolve the CMC powder, thereby obtaining a first solution having a high viscosity and being completely transparent. Next, Super P was added to the first solution and homogenization was conducted for 30 minutes, and then AC was added and homogenization was conducted for 150 minutes until the AC was completely and evenly dispersed, followed by adding SBR and conducting homogenization for 15 minutes, thereby obtaining a first electrode slurry. The weight percentages of the CMC, SBR, Super P and AC were shown in Table 4 below, and a dry powder of the first electrode slurry (i.e., including the CMC, SBR, Super P and AC) had a weight of 0.2 g.

**Table 4**

| CMC | SBR | Super P | AC |
|---|---|---|---|
| 1.5% | 5% | 3.5% | 90% |

The amounts of CMC, SBR, Super P and AC in the dry powder of the second electrode slurry were the same as those of the first electrode slurry, and the procedures for preparing the second electrode slurry were substantially similar to those for preparing the first electrode slurry, except that the dry powder of the second electrode slurry had a weight of 0.5 g. To be specific, CMC powder was added to a second deionized water (volume: 12 mL), and then homogenization was conducted using the homogenizer at room temperature for 40 minutes to completely dissolve the CMC powder, thereby obtaining a second solution having a high viscosity and being completely transparent. Thereafter, Super P was added to the second solution and homogenization was conducted for 40 minutes, and then AC was added and homogenization was conducted for 180 minutes until the AC was completely and evenly dispersed, followed by adding SBR and conducting homogenization for 30 minutes, thereby obtaining a second electrode slurry.

### Starting materials for carbon electrode sheets

Aluminum foil was purchased from Japan Capacitor Industrial Co., Ltd., and product number thereof was 30C054.

### Preparation of carbon electrode sheets

The first electrode slurry was introduced into a doctor blade coating machine with a gap size being adjusted to 150 µm, so as to allow the first electrode slurry to be evenly coated on an aluminum foil (serving as a first aluminum current collector), thereby forming a first electrode coating on the first aluminum current collector. Next, the first electrode coating and the first aluminum current collector were placed into a vacuum oven, and then heated at a temperature of 110°C for at least 4 hours to ensure that the first electrode coating was completely dried. Thereafter, the resultant dried first electrode coating and the first aluminum current collector were placed in a roller and subjected to rolling at a rolling rate ranging from 30% to 40%, so that a first carbon electrode layer having a thickness ranging from 40 µm to 50 µm was formed on the first aluminum current collector, thereby obtaining a first carbon electrode component including the first carbon electrode layer and the first aluminum current collector. Subsequently, the first carbon electrode component was cut into a plurality of first carbon electrode sheets, so as to obtain a first group of carbon electrode sheets. It should be noted that, each of the first carbon electrode sheets had a first working area (dimension of surface area: 1.0 cm × 1.0 cm) and a first welding area protruding outwardly from the first working area.

The procedures for preparing the second group of carbon electrode sheets were substantially similar to those for preparing the first group of carbon electrode sheets except for the following differences: (i) the gap size of the doctor blade coating machine was adjusted to 200 µm; (ii) the second electrode slurry were subjected to coating, heating and rolling so as to form a second carbon electrode layer having a thickness of 80 µm on a second aluminum current collector, thereby obtaining a second carbon electrode component including the second carbon electrode layer and the second aluminum current collector; (iii) the second carbon electrode component was cut into a plurality of second carbon electrode sheets, so as to obtain a second group of carbon electrode sheets; and (iv) each of the second carbon electrode sheets had a second working area (dimension of surface area: 3.5 cm × 3.5 cm) and a second welding area protruding outwardly from the second working area.

### Starting materials for supercapacitor

Triethylmethylammonium tetrafluoroborate (abbreviated as TEMABF₄ hereinafter) was purchased from Tokyo Chemical Industry Co., Ltd., and product number thereof was T2198.

Propylene carbonate (abbreviated as PC hereinafter) was purchased from Sigma, and product number thereof was 107913.

Acrylonitrile (abbreviated as AN hereinafter) was purchased from Sigma, and product number thereof was 605310.

Aluminum tab lead was purchased from UBIQ Technology Co., Ltd., and had a thickness of 0.1 mm, a width of 3.0 mm and a length of 65.0 mm.

Nickel tab lead was purchased from UBIQ Technology Co., Ltd., and had a thickness of 0.1 mm, a width of 3.0 mm and a length of 65.0 mm.

Separator, serving as a separator membrane of supercapacitor, was purchased from Union Chemical Ind. Co., Ltd., and product number thereof was TF40-30.

Aluminum laminated film (abbreviated as ALF hereinafter) was purchased from UBIQ Technology Co., Ltd., and had a thickness of 113 µm, a width of 480 mm and a length of 10 m.

### Assembly of supercapacitor

It should be noted that, two of the first carbon electrode sheets were grouped together to respectively serve as a first positive electrode sheet and a first negative electrode sheet of the test supercapacitor. First, residues of the first carbon electrode layer remaining on the welding area of each of the first positive electrode sheet and the first negative electrode sheet were cleaned by wiping, followed by welding, using an ultrasonic spot welding apparatus, an aluminum tab lead and a nickel tab lead respectively on the welding areas of the first positive electrode sheet and the first negative electrode sheet, wherein each of the aluminum tab lead and the nickel tab lead was wrapped with an adhesive film on a surface opposite to a corresponding surface of the welding area. Next, a first separator membrane, which had an appropriate size and sandwiched between the working area of each of the first positive electrode sheet and the first negative electrode sheet, was rolled over to wrap around the first positive electrode sheet and the first negative electrode sheet. Thereafter, the first separator membrane wrapping around the first positive electrode sheet and the first negative electrode sheet was placed into a plastic bag, which was then subjected to vacuum-drying to remove moisture present in inner portions of each of the first positive electrode sheet and the first negative electrode sheet. Afterwards, the plastic bag containing the first positive electrode sheet, the first negative electrode sheet and the first separator membrane was placed into an argon-filled glove box, and then a first electrolyte (containing TEMABF₄ in a concentration of 1 M and PC) was drop-added into the plastic bag, so as to allow the first positive electrode sheet, the first negative electrode sheet and the first separator membrane to be completely soaked in the first electrolyte. Subsequently, an opening of the plastic bag was sealed using a vacuum-sealing machine to ensure that the aluminum tab lead and the nickel tab lead were exposed outside from the plastic bag, and that the adhesive film on each of the aluminum tab lead and the nickel tab lead was flush with the opening of the plastic bag, thereby obtaining the test supercapacitor.

The procedures for assembling the pouch cell were substantially similar to those for assembling the test capacitor except for the following differences: (i) two of the second carbon electrode sheets were grouped together to respectively serve as a second positive electrode sheet and a second negative electrode sheet of the pouch cell; (ii) two ALFs having the same size were grouped and stacked together to form a stack of ALFs, and then three sides of the stack of ALFs were sealed using the vacuum-sealing machine to obtain an aluminum bag having an opening; (ii) a second separator membrane wrapping around the second positive electrode sheet and the second negative electrode sheet was placed into the aluminum bag, which was then subjected to vacuum-drying to remove moisture present in inner portions of each of the second positive electrode sheet and the second negative electrode sheet; (iii) the aluminum bag containing the second positive electrode sheet, the second negative electrode sheet and the second separator membrane was placed into the argon-filled glove box, and then a second electrolyte (containing TEMABF₄ in a concentration of 1 M and AN) was drop-added into the aluminum bag, so as to allow the second positive electrode sheet, the second negative electrode sheet and the second separator membrane to be completely soaked in the second electrolyte; and (iv) the vacuum-sealing machine was used to seal the opening of the aluminum bag so as to obtain the pouch cell.

In addition, based on the results shown in Table 3, the activated carbon material of Elf and another activated carbon material purchased from Kuraray (product no.: YF-50F) were sent to a supercapacitor assembly factory, so as to assemble a supercapacitor of E1f and a supercapacitor of Comparative Example 3 (CE3).

### Performance test of supercapacitors

### 1. Specific capacitance (unit: F/g)

A respective one of the test supercapacitors of CE1, CE3, E1a, E1b, E1f, E1g, E1h, E1i and E3 and a respective one of the pouch cells of CE1, CE3, E1a, E1b, E1f, E1g, E1h, E1i and E3 were subjected to measurement of specific capacitance using the Solartron Analytical CellTest^{®} System (Model no.: 1470E). First, the first positive electrode sheet and the first negative electrode sheet of the test supercapacitor, and the second positive electrode sheet and the second negative electrodes sheet of the pouch cell were activated by cyclic voltammetry at a scan rate of 50 mV/sec and a scan voltage ranging from 0 V to 2.7 V. Next, the respective one of the test supercapacitors and the respective one of the pouch cells were subjected to charging at a current density of 2A/g. Thereafter, at each of current densities of 2 A/g and 100 A/g, the respective one of the test supercapacitors of CE1, E1a, E1b, E1g and E1h was subjected to a constant current discharge test at a voltage ranging from 0 V to 2.7 V; at each of current densities of 0.5 A/g, 5A/g, 10 A/g, 12.5 A/g, 15 A/g, 20 A/g and 25 A/g, the respective one of the pouch cells of E3, E1a, E1g and E1i was subjected to a constant current charge-discharge test for 5 times at a voltage ranging from 0 V to 2.7 V; and at each of current densities of 0.5 A/g, 1.0 A/g, 2.5 A/g, 5.0 A/g, 7.0 A/g, 10.0 A/g, 12.5 A/g, 15.0 A/g, 17.5 A/g, 20.0 A/g, 22.5 A/g and 25.0 A/g, the respective one of the pouch cells of E3, E1a, E1g and E1i was again subjected to the constant current charge-discharge test once at a voltage ranging from 0 V to 2.7 V. Afterwards, the specific capacitance of the respective one of the test supercapacitors and the respective one of the pouch cells was calculated using the following Equation (V): $Specific capacitance = \left(4\times I\times td\right) \div \left(M\times ΔV\right)$ in which
l = discharge rate
td = discharge time (seconds)
M = weight of carbon electrode layer in carbon electrode sheet of each supercapacitor
ΔV = potential difference after deduction of internal resistance drop (IR drop)

### 2. Capacity retention rate (unit: %)

The capacity retention rate of the respective one of the test supercapacitors and the respective one of the pouch cells was calculated using the following Equation (VI): $Capacity retention rate = \left({X}_{1}\right) \div \left({X}_{2}\right) \times 100 %$ in which
X₁ = capacitance at current density of 25 A/g
X₂ = capacitance at current density of 0.5 A/g

**Table 5**

| | BET (m²/g) | Total volume of micropores (%) | Total volume of mesopores (%) | Specific capacitance (F/g) | |
|---|---|---|---|---|---|
| | | | | 2 A/g | 100 A/g |
| CE1 | 2802 | 72 | 28 | 160 | 110 |
| E1a | 2616 | 81 | 19 | 154 | 130 |
| E1b | 2895 | 85 | 15 | 156 | 130 |
| E1g | 2989 | 66 | 34 | 147 | 121 |
| E1h | 2824 | 59 | 41 | 153 | 117 |

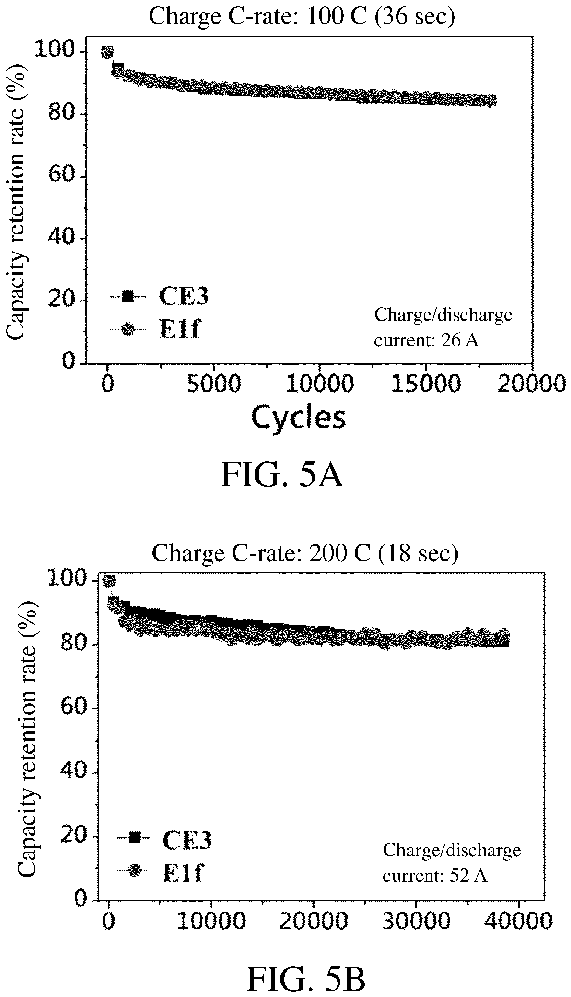

As shown in FIG. 5, at the current density of 2 A/g, the specific capacitances of the test supercapacitors of E1a, E1b, E1g and E1h were 154 F/g, 156 F/g, 147 F/g and 153 F/g, all of which were lower than the specific capacitance of the test supercapacitor of CE1 (i.e., 160 F/g); however, at the relatively high current density of 100 A/g, the specific capacitances of the test supercapacitors of E1a, E1b, E1g and E1h were 130 F/g, 130 F/g, 121 F/g and 117 F/g, all of which were higher than the specific capacitance of the test supercapacitor of CE1 (i.e., 110 F/g). These results indicate that, at the relatively high current density of 100 A/g, the respective one of the test supercapacitors of E1a, E1b, E1g and E1h of the present disclosure had a power density superior to that of the test supercapacitor of CE1.

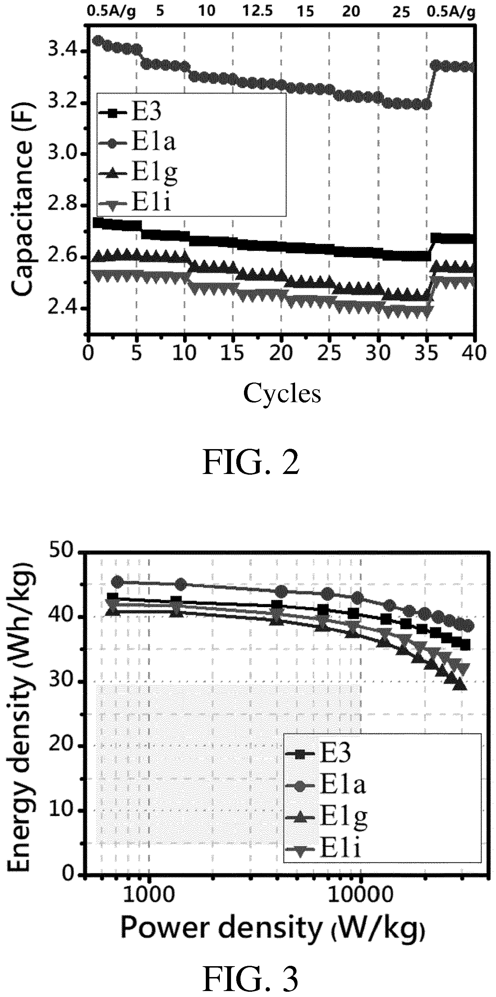

Referring to the graph illustrating relationship between capacitance and number of cycles of FIG. 2, after being subjected to the constant current charge-discharge test for 5 times at each of the current densities of 0.5 A/g, 5A/g, 10 A/g, 12.5 A/g, 15 A/g, 20 A/g and 25 A/g, the capacitance of the respective one of the pouch cells of E3, E1a, E1g and E1i decreased gradually; however, when the aforesaid pouch cells were again subjected to the constant current charge-discharge test at the current density of 0.5 A/g after being subjected to the constant current charge-discharge test for 5 times, the capacitance of the respective one of the pouch cells of E3, E1a, E1g and E1i was close to the capacitance of the first time of the 5 times of the constant current charge-discharge test at the current density of 0.5 A/g. These results indicate the pouch cells of E3, E1a, E1g and E1i each had an excellent capacity retention rate.

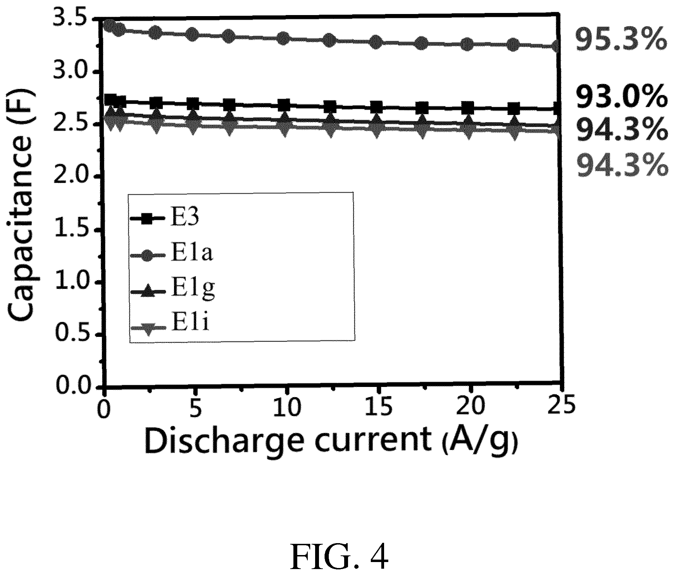

Referring to the graph illustrating relationship between energy density and power density (which was derived based on the data shown in FIG. 2) of FIG. 3, both the energy density and the power density of the respective one of the pouch cells of E3, E1a, E1g and E1i were greater than those of conventional supercapacitors (indicated by the grey-shaded area in the graph). In addition, referring to FIG. 4, the capacity retention rate of the respective one of the pouch cells of E3, E1a, E1g and E1i was not lower than 93.0% after being subjected to the constant current charge-discharge test at the current density ranging from 0. 5 A/g to 25 A/g.

Referring to FIG. 5A, the cycle life of the respective one of the supercapacitors of E1f and CE3 of the present disclosure was close to 18000 cycles under a test condition in which a charge C-rate was 100 C and a charge/discharge current was 26 A, the graph illustrating relationship between capacity retention rate and number of cycles for these supercapacitors exhibited similar trends, and the capacity retention rates of these supercapacitors being maintained at not lower than 80%. Referring to FIG. 5B, the cycle life of the respective one of the supercapacitors of E1f and CE3 of the present disclosure was close to 40000 cycles under a test condition in which a charge C-rate was 200 C and a charge/discharge current was 52 A, the graph illustrating relationship between capacity retention rate and number of cycles for these supercapacitors exhibited similar trends, and the capacity retention rates of these supercapacitors were maintained at approximately 80%. These results showed that after the activated carbon material for supercapacitor made by the method of the present disclosure was made into carbon electrode sheets that were assembled to form a supercapacitor, the charge/discharge properties of the supercapacitor were substantially similar to those of the supercapacitor assembled using carbon electrode sheets made from activated carbon material available commercially (CE3), indicating that the method of the present disclosure is capable of improving the economic value of heavy hydrocarbon oil that are sold at low price.

In summary, by virtue of the method for making activated carbon material for the supercapacitor of the present disclosure, the economic value of heavy hydrocarbon oil sold at low price can be improved, and the activated carbon material obtained by the method have high BET and high total pore volume, such that a supercapacitor assembled using carbon electrode sheets prepared from the activated carbon material exhibited high energy density, high power density and excellent capacity retention rate. Therefore, the purpose of the present disclosure can indeed be achieved.

## Claims

1. A method for making an activated carbon material for a supercapacitor, the method being **characterized by** the steps of:
A) heating a heavy hydrocarbon oil at a pressure ranging from 2 atm to 3 atm and a temperature ranging from 480°C to 580°C for at least 4 hours such that the heavy hydrocarbon oil undergoes a coking reaction to form a soft carbon precursor, the soft carbon precursor containing a mesophase structure of greater than 50 vol% based on 100 vol% of the soft carbon precursor as determined according to ASTM D4616-95 (2013), and having a quinoline-insoluble content ranging from 78 wt% to 98 wt% as determined according to ASTM D7280-06 (2011) and a toluene-insoluble content ranging from 88 wt% to 100 wt% as determined according to ASTM D4312-95a (2010);
B) mixing the soft carbon precursor and an activator so as to obtain a mixture;
C) heating the mixture such that the mixture undergoes an activation reaction and a carbonization reaction to obtain a first carbonaceous component containing an activated carbon and a residual of the activator;
D) removing the residual of the activator from the first carbonaceous component so as to obtain a second carbonaceous component;
E) grinding and sizing the second carbonaceous component so as to obtain a third carbonaceous component; and
F) heating the third carbonaceous component so as to obtain the activated carbon material for the supercapacitor.

2. The method as claimed in claim 1, wherein in step B), a weight ratio of the soft carbon precursor to the activator ranges from 0.125 to 0.25.

3. The method as claimed in claim 1 or 2, wherein in step C), the mixture is heated to a temperature ranging from 700°C to 900°C at a heating rate ranging from 1°C/min to 10°C/min under nitrogen atmosphere.

4. The method as claimed in any one of claims 1 to 3, wherein in step F), the third carbonaceous component is heated to a temperature of less than 1000°C at a heating rate ranging from 1°C/min to 10°C/min under nitrogen atmosphere.

5. The method as claimed in any one of claims 1 to 4, wherein in step F), the activated carbon material has a plurality of micropores and a plurality of mesopores, a diameter of each of the plurality of mesopores being greater than a diameter of each of the plurality of micropores, and a ratio of a total volume of the plurality of micropores to a total volume of the plurality of mesopores ranging from 0.45 to 7.5, which is determined according to the procedures described in paragraphs [0041]-[0047] .

6. The method as claimed in any one of claims 1 to 5, wherein in step B), the activator is potassium hydroxide.

7. The method as claimed in any one of claims 1 to 6, wherein in step D), the residual of the activator is removed by subjecting the first carbonaceous component to an acid washing treatment, a water washing treatment and a drying treatment.

## Patentansprüche

1. Ein Verfahren zur Herstellung eines Aktivkohlematerials für einen Superkondensator, wobei das Verfahren durch die folgenden Schritte gekennzeichnet ist:
A) Erhitzen eines schweren Kohlenwasserstofföls bei einem Druck von 2 atm bis 3 atm und einer Temperatur von 480 °C bis 580 °C für mindestens 4 Stunden, sodass das schwere Kohlenwasserstofföl eine Verkokungsreaktion durchläuft, um einen weichen Kohlenstoffvorläufer zu bilden, wobei der weiche Kohlenstoffvorläufer eine Mesophasenstruktur von mehr als 50 Vol.-% basierend auf 100 Vol.-% des weichen Kohlenstoffvorläufers aufweist, bestimmt gemäß ASTM D4616-95 (2013), und einen in Quinolin unlöslichen Gehalt von 78 Gew.-% bis 98 Gew.-% aufweist, bestimmt gemäß ASTM D7280-06 (2011), sowie einen in Toluol unlöslichen Gehalt von 88 Gew.-% bis 100 Gew.-%, bestimmt gemäß ASTM D4312-95a (2010);
B) Mischen des weichen Kohlenstoffvorläufers und eines Aktivators, um eine Mischung zu erhalten;
C) Erhitzen der Mischung, sodass die Mischung eine Aktivierungsreaktion und eine Karbonisierungsreaktion durchläuft, um eine erste kohlenstoffhaltige Komponente zu erhalten, die einen Aktivkohleanteil und einen Rest des Aktivators enthält;
D) Entfernung des Rückstands des Aktivators aus der ersten kohlenstoffhaltigen Komponente, um eine zweite kohlenstoffhaltige Komponente zu erhalten;
E) Mahlen und Klassieren der zweiten kohlenstoffhaltigen Komponente, um eine dritte kohlenstoffhaltige Komponente zu erhalten und
F) Erhitzen der dritten kohlenstoffhaltigen Komponente, um das Aktivkohlematerial für den Superkondensator zu erhalten.

2. Das Verfahren nach Anspruch 1, wobei in Schritt (B) ein Gewichtsverhältnis des weichen Kohlenstoffvorläufers zum Aktivator im Bereich von 0,125 bis 0,25 liegt.

3. Das Verfahren nach Anspruch 1 oder 2, wobei in Schritt (C) die Mischung unter Stickstoffatmosphäre auf eine Temperatur von 700 °C bis 900 °C mit einer Aufheizgeschwindigkeit von 1 °C/min bis 10 °C/min erhitzt wird.

4. Das Verfahren nach einem der Ansprüche 1 bis 3, wobei in Schritt (F) die dritte kohlenstoffhaltige Komponente unter Stickstoffatmosphäre mit einer Aufheizgeschwindigkeit im Bereich von 1 °C/min bis 10 °C/min auf eine Temperatur von weniger als 1000 °C erhitzt wird.

5. Das Verfahren nach einem der Ansprüche 1 bis 4, wobei in Schritt (F) das Aktivkohlenstoffmaterial eine Vielzahl von Mikroporen und eine Vielzahl von Mesoporen aufweist, wobei der Durchmesser jedes der Mesoporen größer ist als der Durchmesser jedes der Mikroporen, und ein Verhältnis des Gesamtvolumens der Mikroporen zum Gesamtvolumen der Mesoporen im Bereich von 0,45 bis 7,5 liegt, welches gemäß den in den Absätzen [0041] bis [0047] beschriebenen Verfahren bestimmt wird.

6. Das Verfahren nach einem der Ansprüche 1 bis 5, wobei in Schritt (B) der Aktivator Kaliumhydroxid ist.

7. Das Verfahren nach einem der Ansprüche 1 bis 6, wobei in Schritt (D) der Rückstand des Aktivators durch eine Säurewäsche, eine Wasserwäsche und eine Trocknungsbehandlung des ersten kohlenstoffhaltigen Bestandteils entfernt wird.

## Revendications

1. Procédé de fabrication d'un matériau à base de charbon actif destiné à un supercondensateur, le procédé étant **caractérisé par** les étapes suivantes :
A) le chauffage d'une huile hydrocarbonée lourde à une pression comprise entre 2 atm et 3 atm et à une température comprise entre 480 °C et 580 °C pendant au moins 4 heures, de telle sorte que l'huile d'hydrocarbures lourds subisse une réaction de cokéfaction pour former un précurseur de carbone mou, ledit précurseur de carbone mou contenant une structure mésophase supérieure à 50 % en volume par rapport à 100 % en volume du précurseur de carbone mou, telle que déterminée selon la norme ASTM D4616-95 (2013), et présentant une teneur en matières insolubles dans la quinoléine de compris entre 78 % en poids et 98 % en poids, tel que déterminé selon la norme ASTM D7280-06 (2011) et une teneur en matières insolubles dans le toluène comprise entre 88 % en poids et 100 % en poids, déterminée conformément à la norme ASTM D4312-95a (2010) ;
B) mélanger le précurseur de carbone mou et un activateur de manière à obtenir un mélange;
C) chauffer le mélange de manière à que celui-ci subisse une réaction d'activation et une réaction de carbonisation pour obtenir un premier composant carboné contenant du charbon actif et un résidu de l'activateur ;
D) éliminer le résidu de l'activateur du premier composant carboné composant de manière à obtenir un deuxième composant carboné ;
E) broyer et calibrer le deuxième composant carboné de manière à obtenir un troisième composant carboné ; et
F) chauffer le troisième composant carboné de manière à obtenir le charbon actif pour le supercondensateur.

2. Procédé selon la revendication 1, dans lequel, à l'étape B), le rapport pondéral entre le précurseur de carbone mou et l'activateur est compris entre 0,125 et 0,25.

3. Procédé selon la revendication 1 ou 2, dans lequel, à l'étape C), le mélange est chauffé à une température comprise entre 700 °C et 900 °C à une vitesse de chauffage comprise de 1 °C/min à 10 °C/min sous atmosphère d'azote.

4. Procédé selon l'une quelconque des revendications 1 à 3, dans lequel, à l'étape F), le troisième composant carboné est chauffé à une température inférieure à 1000 °C à une vitesse de chauffage comprise entre 1 °C/min et 10 °C/min sous atmosphère d'azote.

5. Procédé selon l'une quelconque des revendications 1 à 4, dans lequel, à l'étape F), le matériau de charbon actif comporte une pluralité de micropores et une pluralité de mésopores, le diamètre de chacun des mésopores étant supérieur au diamètre de chacun des micropores, et le rapport entre le volume total des micropores et le volume total des mésopores étant compris entre 0,45 et 7,5, ce rapport étant déterminé selon les procédures décrites aux paragraphes [0041] à [0047].

6. Procédé selon l'une quelconque des revendications 1 à 5, dans lequel, à l'étape B), l'activateur est l'hydroxyde de potassium.

7. Procédé selon l'une quelconque des revendications 1 à 6, dans lequel, à l'étape D), le résidu de l'activateur est éliminé en soumettant le premier composant carboné à un traitement de lavage acide, à un traitement de lavage à l'eau et à un traitement de séchage.
